# EUROPEAN PATENT APPLICATION

(11) **EP 4 273 719 A1**
(43) Date of publication of application: **08.11.2023**
(21) Application number: 23170311.7
(22) Date of filing: 27.04.2023
(51) Int. Cl.: G06F 17/18

(54) **A FILTERING METHOD OF FILTERING MEASURED VALUES OF A MEASURAND AND A METHOD OF USING THIS FILTERING METHOD IN A METHOD OF DETERMINING AND PROVIDING A MEASUREMENT RESULT OF A MEASURAND**

(30) Priority: 06.05.2022 DE 102022111387
(71) Applicant: Endress+Hauser Group Services AG, 4153 Reinach (CH)
(72) Inventor: Vaissiere, Dimitri, 68170 Rixheim (FR)
(74) Representative: Redding, Anke

(57) **Abstract**

A method of filtering measured values (mv) is disclosed, comprising the steps of: based on recorded data (D) including the measured values (mv) parametrizing a filter (13) by: setting a filtering strength (S) of the filter (13) to an initial filtering strength (S1), filtering the measured values (mv) and determining a fractal dimension (d₁) of the filtered values (fv₁), and iteratively repeating this process by: increasing the filtering strength (S), filtering the measured values (mv) and determining the fractal dimension (dₙ) of the filtered values (fvₙ) until a decay of the fractal dimensions (Δdₙ) determined at the end of each iteration (n) drops below a threshold (Δd_{ref}). Next, the filter (13) is put into operation based on a parametrization corresponding to the filtering strength (Sn) employed in the last iteration (n) and a filtering result (FR) of the measured values (mv) is determined and provided.

## Description

The invention concerns a filtering method, in particular a computer implemented filtering method, of filtering measured values of a measurand, a method of using this filtering method in a method of determining and providing a measurement result of a measurand, comprising the steps of:
by means of a measurement device repeatedly or continuously determining and providing measured values of the measurand,
filtering the measured values by performing the filtering method, and
determining and providing the measurement result of the measurand as or based on a filtering result determined by performing the filtering method, as well as a measurement device and a measurement system performing this method.

Filtering methods of filtering time series of measured values of various different types of measurands are employed in very many different applications to remove noise included in the measured values, and/or to determine properties of the noise, e.g. as or based on a residue between the measured values and filtered values of the measured values.

As an example, measurement devices measuring measurands of interest in a specific application are employed in a large variety of different applications including industrial applications, as well as laboratory applications. Measured values of measurands determined and provided by measurement devices employed in a specific application are often employed to monitor, to regulate and/or to control the measurands, an operation of a plant or facility, e. g. a production facility, and/or at least one step of a process, e. g. a production process, performed at the application. For example, in a chemical production process, concentrations of reactants used in the production process and/or the concentration of analytes contained in pre-products, intermediate products and/or educts produced by the process can be monitored and a sequence of process steps of the production process can be scheduled, regulated and/or controlled based on the measured values of the measurands. As an example, liquid analysis measurement devices measuring measurands, such as a pH-value, a concentration of free chlorine and/or a turbidity of a medium, are e. g. employed in swimming pools, as well as in drinking water supply networks and water purification plants to monitor, to regulate and/or to control the quality of the water.

Depending on the specific application, an efficiency and/or a productivity of a production process, a product quality of products produced, the safety of operation of facilities, industrial plants and/or laboratories and/or the quality of drinking water may by depend on the measurement accuracy and the reliability of the measured values.

Unfortunately, measured values of measurands, such as measured values determined, e.g. measured, by measurement devices not only include a main component corresponding to the quantification of the measurand, but also noise superimposed on the main component. This noise impairs the reliability and the accuracy of the measured values, which in turn may have negative effects on any monitoring, regulating, controlling and/or at least one other task performed based on the measured values.

This problem can be overcome by filtering the measured values by means of a filter capable of eliminating at least some of the noise. Examples of filters available for this purpose include smoothing filters, moving average filters, Savitzky-Golay filters and wavelet decomposition filters. These filters have been proven in use. A disadvantage is however, that these filters require parametrization before they can be put into operation.

Depending on the type of filter, parameterization e.g. includes determining an optimum setting or value for each filter parameter of the filter and adjusting the filter settings of the filter accordingly. By means of the parametrization a filtering strength of the filter is determined. When the filtering strength employed is too low, the filter is too course to remove all the noise. In consequence, in this case the filtered values still include a considerable amount of noise. On the other hand, when the filter filtering strength is too high, not only the noise but also contributions of the main component will be eliminated. In this case, rapid changes in time of the measurand may no longer be reflected in the filtered values.

As a simple example, when a moving average filter determining each filtered value as a moving average of a predetermined number of consecutively determined measured values is used, parametrization includes determining the number of measured values employed to determine each filtered value. When the filtered values are determined as the moving average of only two measured values the filtering strength is low, and the filtered values may therefore still include a considerable amount of noise. On the other hand, when the filtered values are determined as a moving average of an extremely large number of measured values, e.g. hundreds of measured values, the filtering strength is very high. In this case, the time series of the measured values may be flattened by the filtering to such an extent, that the filtered values no longer reflect the time dependency of the main component representing the size of the measurand.

In consequence, parametrization of the filter normally requires an expert analysis of the properties of the measured values and of the properties of the noise followed by a manual adjustment of the filter parameters. The properties of the measured values and the noise are normally not known upfront. This makes the parametrization a demanding, time and cost intensive process, in particular when complex and/or convoluted filtering methods are employed.

Some of this time and effort could be avoided if a more universally applicable filter parametrization could be employed, e.g. a parametrization, that could at least be used for filtering time series of measured values determined by measurement devices of the same type regardless of the application where the individual measurement devices are employed, and/or regardless of the type of measurement performed by them.

Unfortunately, the properties of the noise included in measured values measured by a measurement device not only depend on properties of the measurement device, e.g. the measurement uncertainty inherent to measurements performed by the measurement device, but also on the time scale on which the measurand changes at the specific application and the measurement conditions the measurement device is exposed to at the measurement site. As an example, the properties of noise included in measured values of a flow of a medium flowing through a pipe measured by a flow meter in an application, where the flow exhibits a stable laminar flow profile inside the pipe, may be very different from the properties of noise included in measured values determined by the same flow meter in an application, wherein the flow profile is significantly less stable. As another example, the properties of noise included in measured values of a level of a medium in a container measured by a level measurement device when the medium exhibits a stable, flat surface, may be very different from the properties of the noise included in the measured values determined by the same level measurement device, when the medium inside the container exhibits a rough surface and/or is covered by foam.

In consequence, even though it may be possible to determine a more universally applicable filter parametrization, employing a filter, that has been parametrized accordingly, to remove noise superimposed on measured values determined in or for a specific application will in most cases be much less effective than employing a filter that has been parametrized based on an expert analysis of the properties of the measured values and the noise included in the measured values determined at or for the specific application.

It is an object of the invention to provide a filtering method of filtering measured values of a measurand, in particular a filtering method suitable for being used in a method of determining and providing a measurement result of a measurand, that enables an efficient noise reduction to be attained, in particular a filtering method, that accounts for application specific properties of the measured values and the noise without requiring an expert analysis or prior knowledge about these properties.

This object is achieved by a filtering method of filtering measured values of a measurand comprising the method steps of:
recording data including measured values of the measurand and their time of determination,
based on training data included in the recorded data parametrizing a filter having an adjustable filtering strength by:
   setting the filtering strength to a predetermined initial filtering strength,
   performing a process of by means of the filter filtering the measured values included in the training data and determining a fractal dimension of the filtered values provided by the filter, and
   iteratively repeating this process by increasing the filtering strength of the filter to a higher filtering strength and by subsequently filtering the measured values and determining the fractal dimension of the filtered values determined by the filter having the higher filtering strength until a decay of the fractal dimensions determined at the end of each iteration of the process drops below a predetermined threshold,
   putting the filter into operation based on a parametrization corresponding to the filtering strength employed in the last iteration, and
   by means of the parametrized filter filtering the measured values of the measurand, and
   providing a filtering result including filtered values of the measured values of the measurand determined by the parametrized filter and/or a residue between the measured values and the filtered values determined by the parametrized filter.

The invention provides the advantage, that the parametrization of the filter is performed in an autonomous entirely data driven manner, that neither requires an expert analysis of the data nor any prior knowledge of the properties of the measured values and the properties of the noise.

Another advantage is, that the fractal dimensions determined during the iterations provide a quantitative measure of the complexity of the filtered values. Correspondingly the sequence of fractal dimensions determined during the iterations provide a quantitative measure of the parameter-dependent capability of the filter to eliminate the noise included in the measured values. Thus, based on the decay of the fractal dimensions, the method provides a parametrization of the filter, that accounts for the application specific properties of the measured values and the application specific properties of the noise. This enables for the method disclosed herein to be universally applied in the same way to determine highly accurate and reliable filtered values, regardless of the application specific properties of the measurand and the noise included in the measured values.

In certain embodiments, the filter is a parametrizable filter, a smoothing filter, a sliding window filter, a moving average filter, a Savitzky-Golay filter, a wavelet decomposition filter, an autoregressive filter, an autoregressive moving average filter, an autoregressive integrated moving average filter, an autoregressive moving average filter configured to filter the measured values based on an autoregressive integrated moving average model, a seasonal autoregressive moving average filter, a network filter, a neural network filter, or a neural network filter including a neural network, a recurrent neural network, a convolutional neural network or a Long short-term memory.

In certain embodiments, the filter is configured to operate based on parameter settings, that are adjustable in a manner that enables for the filtering strength of the filter to be set to a number of different predetermined filtering strengths.

According to a first embodiment, the initial filtering strength is: a) predetermined based on the number of measured values included in the training data and/or based on a frequency spectrum of the measured values included in the training data, or b) set to a default value.

According to a second embodiment the training data is unlabeled data and/or includes a predetermined number of measured values and/or measured values that have been measured during an initial and/or predetermined training time interval or an arbitrarily selected time interval of a predetermined duration.

The certain embodiments, each iteration includes a step of determining the decay of the fractal dimensions:
a) as or based on a ratio of the fractal dimension of the filtered values determined during the respective iteration and a fractal dimension of the unfiltered measured values included in training data, or
b) as or based on a ratio of the fractal dimension of the filtered values determined during the respective iteration and the fractal dimension of the filtered values determined during the previous iteration, or
c) based on three or more of the previously determined fractal dimensions and/or based on a property of a function fitted to several or all previously determined fractal dimensions.

According to a third embodiment, the filtering method additionally comprises the steps of:
at least once, periodically, or repeatedly updating the parametrization of the filter, and
subsequently determining and providing the filtering result with the filter operating based on the updated parametrization,
wherein each updated parametrization is determined by repeating the determination of the parametrization of the filter based on data included in the recorded data, that includes at least one measured value of the measurand, that has been determined and/or recorded after the previous parametrization of the filter has been determined.

According to refinement of the third embodiment each updated parametrization is determined based on data included in the recorded data, that has been determined and/or recorded during a time interval of a predetermined duration preceding the point in time, when the respective updated parametrization is determined.

According to another refinement of the third embodiment the parametrization is updated:
a) periodically after predetermined re-parametrization time intervals,
b) after an event, that may have an impact on properties of the measured values of the measurand and/or on properties of the noise included in the measured values, has occurred, and/or
c) when a given number larger or equal to one of measured values has been determined and/or recorded after the parametrization has last been determined.

The invention further includes a method of using the filtering method according to the invention in a method of determining and providing a measurement result of a measurand comprising the steps of:
by means of a measurement device repeatedly or continuously determining and providing measured values of the measurand, wherein the measurement device is either: a physical device measuring the measurand at a measurement site, or is given by a virtual device, a computer implemented device or a soft sensor repeatedly or continuously determining and providing the measured values of the measurand based on data provided to it,
based on the measured values and their time of determination filtering the measured values of the measurand by performing the filtering method according to the invention, and
determining and providing the measurement result of the measurand as or based on the filtering result determined by performing the filtering method, wherein the filtering result includes the filtered values or includes both the filtered values and the residue.

In certain embodiments, the method of determining the measurement result further comprises at least one of the steps of:
performing the method of determining and providing the measurement result of the measurand for two or more measurands,
monitoring, regulating and/or controlling the measurand or at least one of the measurands, monitoring, regulating and/or controlling an operation of a plant or facility and/or monitoring, regulating and/or controlling at least one step of a process performed at an application, where the measurement device(s) is/are employed, based on the measurement result(s), and
providing the measurement result(s) of the measurand(s) to a superordinate unit configured to monitor, to regulate and/or to control the respective measurand, an operation of a plant or facility, and/or at least one step of a process performed at the application, where the measurement device(s) determining the measured values of the measurand(s) is/are employed.

The invention is also realized in a measurement device configured to perform the method of determining the measurement result, comprising:
a measurement unit configured to determine and to provide the measured values of the measurand,
computing means, a memory associated to the computing means and a computer program installed on the computing means which, when the program is executed by the computing means, cause the computing means to carry out the method of determining and providing the measurement result based on the measured values provided to the computing means by the measurement unit.

The invention is also realized in a measurement system configured to perform the method of determining the measurement result for at least one measurand, the measurement system comprising:
for each measurand a measurement device determining and providing measured values of the respective measurand,
computing means connected to and/or communicating with each measurement device and configured to receive the measured values of each measurand,
a memory associated to the computing means, and
a computer program installed on the computing means which, when the program is executed by the computing means, cause the computing means to carry out the method of determining and providing the measurement result(s) for each measurand.

In certain embodiments of the measurement system: the computing means are located in an edge device, in a superordinate unit or in the cloud, and at least one or each measurement device is connected to and/or communicating with the computing means directly, via a superordinate unit, via an edge device located in the vicinity of the respective measurement device, and/or via the internet.

The invention is further embodied in a computer program comprising instructions which, when the program is executed by a computer, cause the computer to carry out the filtering method according to the invention, based on the measured values provided to the computer, as well as in a computer program product comprising this computer program and at least one computer readable medium, wherein at least the computer program is stored on the computer readable medium.

The invention and further advantages are explained in more detail below based on the example shown in the figures of the drawing, wherein:
- Fig. 1 shows:: method steps of a method of determining a measurement result of a measurand including a method of filtering measured values of the measurand,
- Fig. 2 shows:: a measurement device installed at a measurement site in a specific application,
- Fig. 3 shows:: a measurement system performing the method shown in Fig. 1,
- Fig. 4 shows:: measured flow values and a corresponding measurement result attained by the method shown in Fig. 1,
- Fig. 5 shows:: a sequence of decays of fractal dimensions determined based on the measured flow values shown in Fig. 4,
- Fig. 6 shows:: measured spectral absorption coefficients of a medium and a corresponding measurement result attained by the method shown in Fig. 1,
- Fig. 7 shows:: a sequence of decays of fractal dimensions determined based on the measured spectral absorption coefficients shown in Fig. 6,
- Fig. 8 shows:: measured conductivities of a medium and a corresponding measurement result attained by the method shown in Fig. 1, and
- Fig. 9 shows:: a sequence of decays of fractal dimensions determined based on the measured conductivities shown in Fig. 8.

The invention concerns a filtering method of filtering measured values mvof a measurand m, as well a method of determining and providing a measurement result MR of a measurand m comprising the filtering method.

The filtering method is subsequently described in context with the method of determining and providing the measurement result MR of the measurand m including a method step of performing the filtering method. The field of use of the filtering method is however not limited to the determination of measurement results MR disclosed herein. The filtering method can be employed in the same way to filter time series of measured values mv of other types of measurands m, regardless of how and where the measured values mv of these measurands m are determined and/or provided. Correspondingly the method of determining and providing the measurement result MR disclosed herein only constitutes one example of a method of using the filtering method.

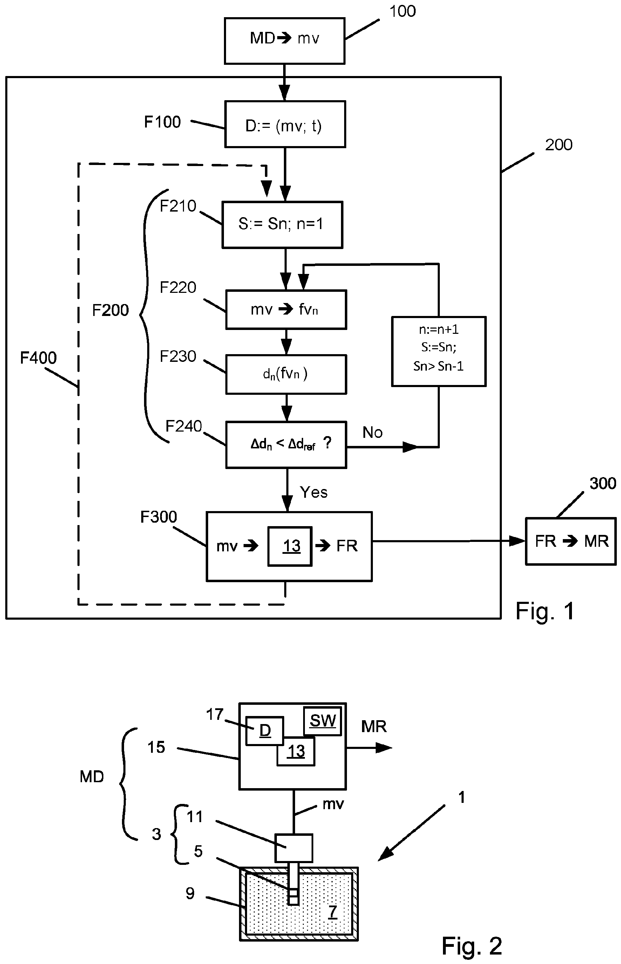

As illustrated in the flow chart shown in Fig. 1, the method of determining and providing the measurement result MR of the measurand m comprises a method step 100 of by means of a measurement device MD repeatedly or continuously determining and providing measured values mv of the measurand m.

The measurement device MD can be any device configured to determine the measurand m. The invention is subsequently described based on examples of measurement devices MD embodied in form of physical devices installed at a measurement site repeatedly or continuously measuring the measurand m and determining and providing the corresponding measured values mv. The invention is not limited to physical measurement devices MD. As an alternative, it can be employed in the same way, when the measurement device MD is embodied in form of a virtual or computer implemented device, e. g. in form of a soft sensor, repeatedly or continuously determining and providing measured values mv of the measurand m based on data provided to the device.

The measurand m is e.g. a level, a pressure, a temperature, a density, a conductivity, a flow, a pH-value, a turbidity, a spectral absorption of a medium, a concentration of an analyte comprised in a medium or another type of variable. In certain embodiments, the measurand m is e.g. given by a measurable variable of interest in a specific application, where the measurement device MD is employed, e. g. a process parameter related to a process performed at the measurement site and/or a property of a medium produced, processed and/or monitored at the measurement site. Examples of applications include industrial applications, e. g. production plants, chemical plants, water treatment or purification plants, as well as laboratory applications. Further examples include applications, wherein measurements are performed in a natural environment, as well as applications in medical diagnostics, e. g. applications wherein in-situ, in-vitro or in-vivo measurements are performed.

Fig. 2 shows an example, where the measurement device MD is installed at the measurement site 1. The measurement device MD shown includes a measurement unit 3 configured to determine, e.g. to measure, the measurand m and to provide the corresponding measured values mv of the measurand m. In the example shown, the measurement unit 3 is or includes a sensor including a sensing element 5 exposed to a medium 7 contained in a container 9 and a measurement electronic 11 connected to the sensing element 5 determining and providing the measured values mv based on a measurement signal provided by the sensing element 5. In the example shown, the sensor is e.g. an absorption sensor measuring a spectral absorption coefficient SAC of the medium 7 or a concentration of an analyte comprised in the medium 5, a turbidity sensor measuring a turbidity of the medium, or a conductivity sensor measuring a conductivity p.

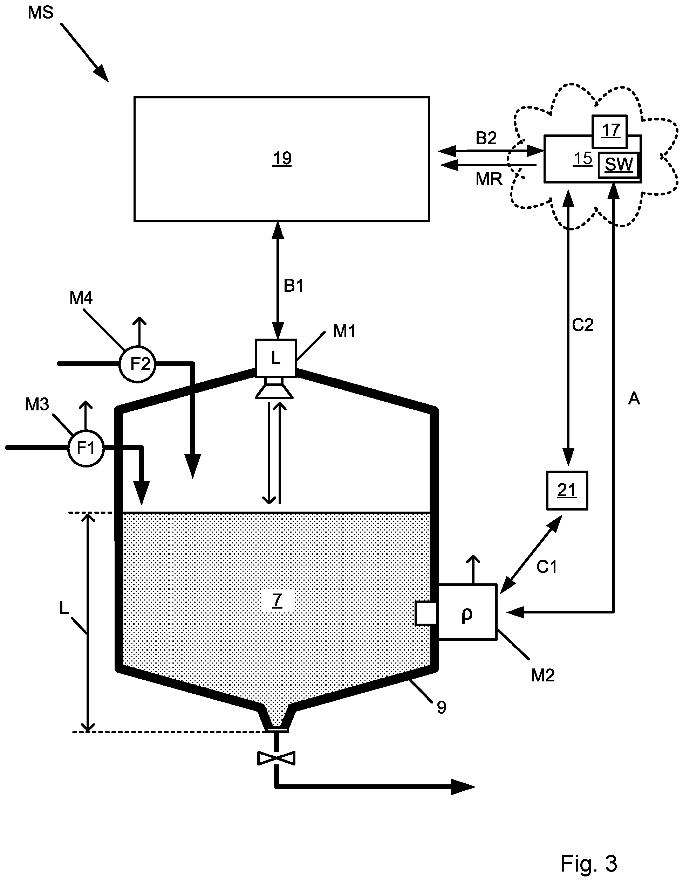

Fig. 3 shows an example of an application, wherein a multitude of variables of interest is measured by measurement devices installed at the application. The exemplary measurement devices shown in Fig. 3 include a level measurement device M1 measuring a level L of a medium 7 contained in a container 9, a conductivity sensor M2 measuring a conductivity p of the medium 7 and two flow meters M3, M4 each measuring a flow F1, F2 of an additive flowing into the container 9. In applications, where two or more variables of interest are measured, the method of determining and providing the measurement result MR of the measurand m, is e.g. performed for at least one or each of the variables of interest at the specific application.

As illustrated in Fig. 1, the method of determining and providing the measurement result MR further includes a method step 200 of filtering the measured values mv by performing the filtering method disclosed herein. The filtering method includes a first method step F100 of continuously recording data D including the measured values mv and their time of determination t.

The filtering method further includes a second method step F200 of based on training data included in the recorded data D parametrizing a filter 13 having an adjustable filtering strength S. To this extent parametrizable filters known in the art can be used. As an example, the filter 13 is e.g. a smoothing filter, a sliding window filter, e.g. a moving average filter, a Savitzky-Golay filter or a wavelet decomposition filter. As another example, the filter 13 is e. g. an autoregressive filter (AR-filter), an autoregressive moving average filter (ARMA-filter), an autoregressive integrated moving average filter (ARIMA-filter) or a seasonal autoregressive moving average filter (SARIMA-filter). As an example, the filter 13 is e.g. an ARIMA filter configured, e.g. programmed, to determine filtered values of the measured values mv based on an autoregressive integrated moving average model (ARIMA model) that is fitted to the time series of the measured values mv. As an alternative the filter 13 is e. g. a network filter or a neural network filter. In case of a neural network filter, a neural network configured to process a data sequence is e.g. employed, and/or the filter 13 is e.g. embodied in form of a neural network filter including a neural network, a recurrent neural network, a convolutional neural network or a Long short-term memory (LSTM).

Regardless of the type of filter employed, the filter 13 is e.g. configured to operate based on parameter settings, that are adjustable in a manner that enables for the filtering strength S of the filter 13 to be set to a number of different predetermined filtering strength Sn. In certain embodiments, the filtering strength S is e. g. understood as a conceptual indication reflecting how much noise included in the measured values mv will be taken out by the filter 13 being adjusted to have the respective filtering strength S. As a simple example, when a moving average filter determining each filtered value as the average of a predetermined number of consecutively determined measured values is employed, the filtering strength S is adjustable by adjusting the predetermined number. In this example, the filtering strength S is increased by increasing the predetermined number. Thus, in the simple case of a moving average filter the filtering strength S is directly represented by the number of consecutively determined measured values mv employed to calculate the average. Obviously more complex parameter settings are employed, when a more complex type of filter is used. In the latter case, the filter strength S may e. g. be represented by a set of parameters. As an example, the filtering strength S of an ARIMA filter may be represented by a set of parameters including an order of the autoregressive model, a degree of differencing and an order of a moving average model employed. The filtering strength S of a neural network filter may be represented by network topology- and hyperparameter settings employed.

Regardless of the type of filter employed, as illustrated in Fig. 1, parametrizing the filter 13 starts with a method step F210 of setting the filtering strength S of the filter 13 to a predetermined initial filtering strength S1, given by S:=Sn; n= 1, followed by a process of performing a method step F220 of with the filter 13 filtering the time series of measured values mv included in the training data and a method step F230 of determining a fractal dimension d₁ of the filtered values fv₁ provided by the filter 13.

This process is iteratively repeated by setting n:=n+ 1 and by increasing the filtering strength S of the filter 13 to a higher filtering strength S:=Sn; Sn >Sn-1, followed by performing the method step F220 of filtering the time series of measured values mv included in the training data and the method step F230 of determining the fractal dimension dₙ of the thus determined filtered values fvₙ until a decay of the fractal dimensions Δdₙ determined at the end of each iteration n drops below a predetermined threshold Δd_{ref}.

As illustrated in Fig. 1, this is e. g. attained by the filtering method including a method step F240 of at the end of each iteration n determining the decay of the fractal dimensions Δdₙ and determining whether the decay of the fractal dimensions Δdₙ is above or below the predetermined threshold Δd_{ref}.In case the decay of the fractal dimensions Δdₙ is above the threshold Δd_{ref} the next iteration n:=n+1 is performed by increasing the filtering strength S, filtering the time series of measured values mv and determining the fractal dimension dₙ of the filtered values fvₙ, which is again followed by method step F240 of determining whether the decay of the fractal dimensions Δdₙ has dropped below the predetermined threshold Δd_{ref}.This iterative process is repeated until the decay of the fractal dimensions Δdₙ drops below the threshold Δd_{ref}.

The training data is unlabeled data and/or e.g. includes a predetermined number of measured values mv and/or measured values mv, that have been determined, e. g. measured, during an initial and/or a predetermined training time interval or during an arbitrarily selected time interval, e.g. a time interval of a predetermined duration.

The initial filtering strength S1 is e.g. a predetermined low filtering strength. As an example, the initial filtering strength S1 is e. g. predetermined based on the number of measured values mv included in the training data and/or based on a frequency spectrum of the measured values mv included in the training data. As an alternative, another method of predetermining the initial filtering strength S1 may be used, or the initial filtering strength S1 may be set according to a known default value. The "gentle" filtering attained by the filter 13 exhibiting the low initial filtering strength S1 provides the advantage, that it ensures that the filtered values fvₙ still contain the properties of the main component of the measured values mv corresponding to the size of the measurand m.

Determining the fractal dimension dₙ of time series, such as the filtered values fvₙ, is a well-known mathematical method, that can be easily implemented in form of a computer program and neither requires an expert analysis of the measured values mv nor any knowledge about the properties of the noise included in measured values mv.

The fractal dimensions dₙ provide a quantitative measure of the complexity of the filtered values fvₙ. Due to the iteratively increased filtering strength S, during each iteration n the filtering smoothens the time series of the measured values mv to a larger extent, than the filtering performed during the previous iteration n-1. This leads to a corresponding reduction of the fractal dimension dₙ of the filtered values fvₙ. In consequence, the decay of the fractal dimensions Δdₙ determined at the end of each iteration n provides a quantitative measure of the increase of the capability of the filter 13 to remove the noise included in the measured values mv attained by increasing the filtering strength S employed.

In context of the methods disclosed herein, various methods of determining the decay of the fractal dimensions Δdₙ can be employed.

As a first example, the decay of the fractal dimensions Δdₙ is e.g. determined for each iteration n individually based on the fractal dimension d₀ of the measured values mv included in training data. In this case each iteration n e.g. includes a step of determining the decay of the fractal dimensions Δdₙ as or based on a ratio of the fractal dimension dₙ determined during the respective iteration n and the fractal dimension d₀ of the unfiltered measured values mv included in training data, e.g. by Δdₙ := dₙ/ d₀.

As a second example, for each iteration n, the decay of the fractal dimensions Δdₙ is e.g. determined based on the fractal dimension dₙ determined during the respective iteration n and the fractal dimension dₙ₋₁ determined during the previous iteration n-1. In this case each iteration n e.g. includes a step of determining the decay of the fractal dimensions Δdₙ as or based on a ratio of the fractal dimension dₙ determined during the respective iteration n and the fractal dimension dₙ₋₁ determined during the previous iteration n-1, e.g. by Δdₙ := dₙ/ dₙ₋₁.

As an alternative another method of determining the decay of the fractal dimensions Δdₙ at the end of each iteration n, e.g. a method of determining the decay of the fractal dimensions Δdₙ based on three or more of the previously determined fractal dimensions dᵢ, dⱼ, dₖ,...; i,j, k ... ∈ [0,1, ..., *n*] and/or based on a property of a function fitted to several or all of the previously determined fractal dimensions d₀, d₁,... , dₙ, can be employed instead.

Regardless of the method applied to determine the decays of the fractal dimensions Δdₙ the iterative process is terminated when the decay of the fractal dimensions Δdₙ drops below the predetermined threshold Δd_{ref}. Following this, in a third method step F300 of the filtering method, the filter 13 is put into operation based on the parametrization corresponding the filtering strength Sn applied in the last iteration n. Thus, in method step F300, the measured values mv of the measurand m are filtered by the thus parametrized filter 13 and a corresponding filtering result FR is provided. Depending on the purpose, for which the filtering method is employed, the filtering result FR e. g. includes the filtered values fv determined by the parametrized filter 13. As an alternative, the filtering result FR e. g. includes a residue Δmv between the measured values mv and the filtered values fv determined based on the measured values mv and the filtered values fv of the measured values mv determined by the parametrized filter 13. As an example, the residue Δmv is e. g. determined as or based on the differences between the measured values mv and the corresponding filtered values fv, e. g. as Δmv:= mv - fv. In certain embodiments, the filtering result FR e. g. includes both, the filtered values fv and the residue Δmv.

Following the method step 200 of filtering the measured values mv by performing the filtering method describe above, the method of determining the measurement result MR of the measurand m further includes a method step 300 of determining and providing the measurement result MR of the measurand m determined by the measurement device MD as or based on the filtering result FR determined by performing the filtering method. Here, the filtering result FR includes the filtered values fv or includes both the filtered values fv and the residue Δmv.

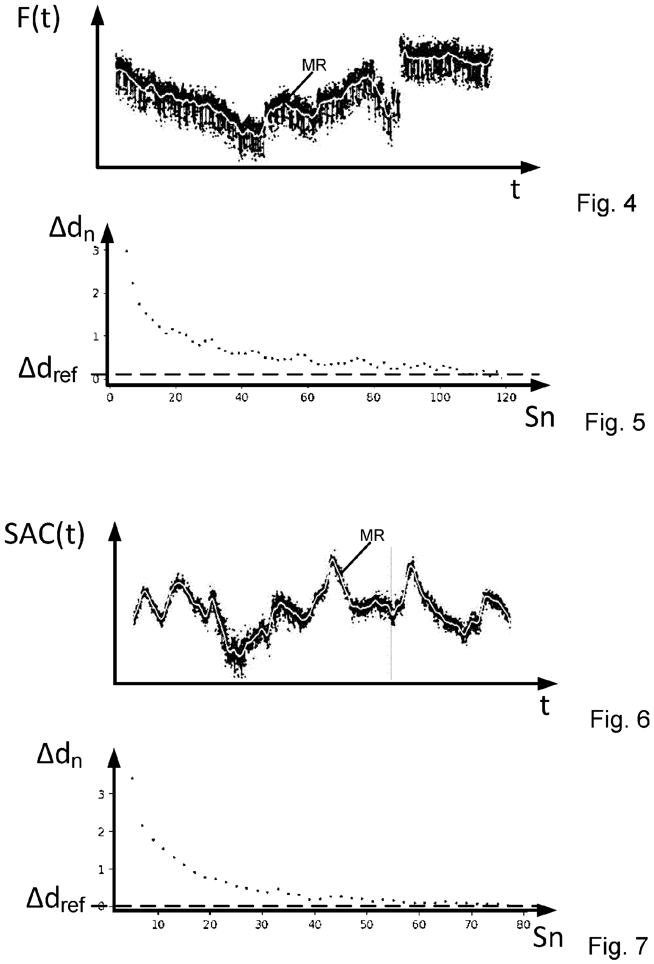

To further illustrate the capability of the filtering method disclosed herein, Fig. 4 shows a time series of measured values mv given by measured flow values F(t) of a flow flowing through a pipe and a solid line representing the measurement result MR attained by filtering the measured flow values F(t) with the filter 13 that has been parametrized as described above. Fig. 5 shows a sequence of decays of the fractal dimensions Δdₙ determined at the end of each of the iterations n performed to parametrize the filter 13 based on the measured flow values F(t) shown in Fig. 4 as a function of the filtering strength Sn employed during the respective iteration n. As can be seen in Fig. 4, the noise included in the measured flow values F(t) is asymmetric and exhibits a higher density above the line and a higher amplitude below the line. Due to the large amplitude of the noise, a fairly lage number of iterations had to be performed for the decay of the fractal dimensions Δdₙ to drop below the threshold Δd_{ref}.

Fig. 6 shows a time series of measured values mv given by spectral absorption coefficients SAC(t) of a medium and a solid line representing the corresponding measurement result MR attained by filtering the spectral absorption coefficients SAC(t) with the filter 13 that has been parametrized as described above. Fig. 7 shows the sequence of decays of the fractal dimensions Δdₙ determined at the end of each of the iterations n performed to parametrize the filter 13 based on the spectral absorption coefficients SAC(t) shown in Fig. 6 as a function of the filtering strength Sn employed during the respective iteration n. As can be seen in Fig. 6, the noise included in the spectral absorption coefficients SAC(t) is approximately symmetrically distributed above and below the line and the noise amplitude is considerably smaller than the amplitude of the noise included in the measured flow values F(t) shown in Fig. 4. Correspondingly, as shown in Fig. 7, the number of iterations n that had to be performed before the decay of the fractal dimensions Δdₙ dropped below the threshold Δd_{ref} is significantly lower, than in the example shown in Fig. 4 and 5.

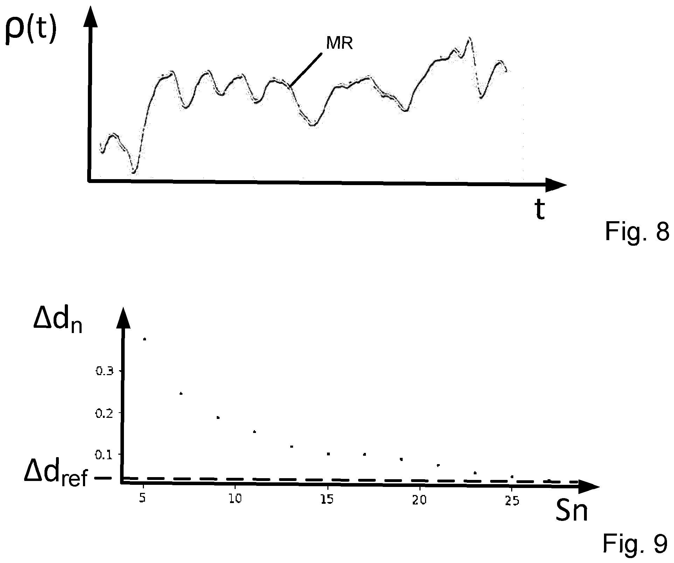

Fig. 8 shows a time series of measured values mv given by measured conductivities p(t) of a medium and a solid line representing the measurement result MR attained by filtering the measured conductivities p(t) with the filter 13 that has been parametrized as described above. Fig. 9 shows a sequence of decays of the fractal dimensions Δdₙ determined at the end of each of the iterations n performed to parametrize the filter 13 based on the measured conductivities p(t) shown in Fig. 8 as a function of the filtering strength Sn employed during the respective iteration n. As can be seen in Fig. 8, only a very limited amount of noise is included in the measured conductivities p(t). Correspondingly, as shown in Fig. 9, the number of iterations that had to be performed before the decay of the fractal dimensions Δdₙ dropped below the threshold Δd_{red} is even lower than in the example shown in Fig. 6 and 7.

As illustrated in Fig. 4 to 9, the quality of the parametrization of the filter 13 determined based on the fractal dimensions dₙ and correspondingly also the capability of the parametrized filter 13 to filter out noise included in the measured values mv is very high, regardless of the different properties the noise included in the measured values mv may have. This enables for the filtering method disclosed herein to be universally applied in the same way to determine highly accurate and reliable measurement results MR of measurands m regardless of the application where the measurands m are determined, regardless of the type of measurement device employed to determine the measured values mv, regardless of the measurement conditions that may affect the determination the measured values mv, e.g. measurement conditions the measurement device MD determining the measurand m is exposed to, and regardless of the properties the noise included in the measured values mv may have. The convergence rate of the iterative method of determining the parametrization depends on the type of filter employed, on the properties of the measured values mv and on the properties of the noise included in the measured values mv. Tests performed based on various types of measured values including different types of noise showed that high convergence rates are attained and that in most cases less than 50 iterations n are required to determine the parametrization of the filter 13.

As mentioned above, the field of use of the filtering method including the method steps F100, F200 and F300 is not limited to the determination of measurement results MR of measurands m. It can be employed in the same way in a multitude of other applications to filter time series of measured value mv of a multitude of different types of measurands m. In this respect the term measurand m is used in a very broad sense to denominate a variable exhibiting variable values that are not completely random, and wherein at least some kind of dependency or relation between present and past variable values of the variable exists. This is e. g. the case when the variable values exhibit at least a certain level of (linear or non-linear) autoregression. As an example, signals representing a physical characteristic evolving over time are, despite possible abrupt changes, are showing an autoregressive behavior. Regardless of the application, the filtering method is performed in the same way as described above based on the corresponding time series of measured values mv to be filtered and their time of determination t.

The invention provides the advantages mentioned above. Individual steps of the filtering method and/or the method of determining the measurement result MR can be implemented in different ways without deviating from the scope of the invention. Several optional embodiments are described in more detail below.

As an example, in certain embodiments, the filtering method may include an additional method step F400 (indicated as an option by the dotted arrow shown in Fig. 1) of at least once, periodically, or repeatedly updating the parametrization of the filter 13. In this case each update is e. g. performed by repeating the method step F200 of parametrizing the filter 13 based on data included in the recorded data D, that includes at least one measured value mv of the measurand m, that has been determined after the previously determined parametrization of the filter 13 has been determined. As an example, each update is e. g. determined based on data included in the recorded data D, that has been determined during a time interval of a predetermined duration preceding the point in time, when the respective update is determined.

Following each update of the parametrization, the filtering result FR including the filtered values fv of the measured values mv and/or the residue Δmv is then determined with the filter 13 operating based on the updated parametrization.

Updating of the parametrization is especially advantages in applications, where properties of the measured values mv of the measurand m and/or properties of the noise included in them may change over time. In this case, each update provides the advantage, that changes of these properties that may have occurred since the last parametrization are accounted for.

With respect to the number and/or the frequency of updating the parametrization various different strategies can be pursued individually and/or in combination.

As an example, in certain embodiments, the parametrization is e. g. updated periodically after predetermined re-parametrization time intervals. In this case each updated parametrization is determined based on data included in the recorded data D, given by or including measured values mv that have been determined and/or recorded during the re-parametrization time interval preceding the update.

In addition, or as an alternative, the parametrization is e. g. updated after an event that may have an impact on the properties of the measured values mv of the measurand m and/or the properties of the noise included in the measured values mv has occurred. In context with the method of determining the measurement result MR events triggering an update of the parametrization to be performed e. g. include:
- a maintenance performed at the measurement site and/or on the measurement device MD,
- a repair, a modification or a replacement of the measurement device MD, and/or
- a shutdown of the measurement site and/or an interruption of a process performed at the measurement site. Regardless of the type of event triggering the update, the updated parametrization is determined based on data included in the recorded data D, that includes at least one measured value mv that has been determined and/or recorded after the event occurred.

As another example, in certain embodiments, the parametrization is e. g. updated, when a given number larger or equal to one of measured values mv has been determined and/or recorded after the parametrization has last been determined. In this case, the updates are each performed based on data included in the recorded data D, that includes the given number of measured values mv that have been determined and/or recorded after the previous parametrization has been determined. Correspondingly frequent updates are especially advantages in applications, where the properties of the measured values mv and/or the noise may change quickly.

The filtering method and/or the method of determining the measurement result MR disclosed herein is preferably performed as a computer implemented method. In that case, the method steps of the respective method, in particular the method step F200 of parametrizing the filter 13 and the method step F300 of determining and providing the filtering result FR with the parametrized filter 13 are performed by computing means 15 by means of a computer program SW based on the measured values mv and their time of determination t provided to the computing means 15 and the filter 13 is embodied in software comprised in the computer program SW. Thus, the invention is also realized in form of a computer program SW comprising instructions which, when the program is executed by a computer, cause the computer to carry out the respective method disclosed herein. In addition, the invention further comprises a tangible computer program product comprising the computer program SW described above and at least one computer readable medium, wherein at least the computer program SW is stored on the computer readable medium.

When the respective method is performed as a computer implemented method, the data D is e. g. transferred to and at least temporarily stored in a memory 17 associated to the computing means 15. The computing means 15 is e. g. embodied as a unit including hardware, e. g. one or more computing units or processors, a computer or a computing system.

The invention disclosed herein is also realized in form of the measurement device MD configured to perform the method of determining and providing the measurement result MR disclosed herein. In the example shown in Fig. 2, the measurement device MD includes the measurement unit 3 measuring the measurand m and providing the measured values mv, the computing means 15, the memory 17 and the computer program SW installed on the computing means 15 which, when the program is executed by the computing means 15, cause the computing means 15 to carry out the method of determining and providing the measurement result MR as described above based on the measured values mv provided to the computing means 15 by the measurement unit 3.

As an alternative option, the computing means 15 and the memory 17 may be located outside the measurement device MD. In this respect, the invention disclosed herein is also realized in form of a measurement system MS comprising the measurement device MD determining and providing the measured values mv, the computing means 15 configured to receive the measured values mv and to provide the measurement results MR determined by the computing means 15, the memory 17 associated to the computing means 15 and the computer program SW installed on the computing means 15 which, when the program is executed by the computing means 15, cause the computing means 15 to carry out the method of determining and providing the measurement result MR as described above based on the measured values mv provided to the computing means 15 by the measurement device MD.

When the computing means 15 are located outside the measurement device MD, the measured values mv determined by the measurement device MD are directly or indirectly provided to the computing means 15 or the memory 17 associated to the computing means 15. To this extent hard wired or wireless connections and/or communication protocols known in the art, like e. g. LAN, W-LAN, Fieldbus, Profibus, Hart, Bluetooth, Near Field Communication, TCP/IP etc. can be applied.

In certain embodiments, the measurement system MS, may include more than one measurement device MD. In this case, the computing means 15 are configured to receive the measured values mv provided by each of the measurement devices MD and to provide the corresponding measurement results MR determined by the computing means 15 by executing the computer program SW for each of the measurands m determined or measured by the measurement devices MD.

In the example shown in Fig. 3, the measurement system MS is configured to perform the method of determining and providing the measurement results MR for at least one or each of the measurands L, p, F1, F2 measured by the measurement devices M1, M2, M3, M4 and the computing means 15 and the memory 17 are embodied in the cloud. Thus, in this example, cloud computing is applied. Cloud computing denominates an approach, wherein IT-infrastructure, like hardware, computing power, memory, network capacity and/or software are provided via a network, e. g. via the internet.

In Fig. 3, each measurement device M1, M2, M3, M4 is e. g. connected to and/or communicating with the computing means 15 directly as illustrated by the arrow A shown in Fig. 3, via a superordinate unit 19, e. g. a programmable logical controller, as illustrate by the arrows B1 and B2, and/or via an edge device 21 located in the vicinity of the measurement devices M1, M2, M3, M4 as indicated by the arrows C1, C2. As an example, at least one or each of the measurement devices M1, M2, M3, M4, the edge device 21 and/or the superordinate unit 19 may be directly or indirectly connected to the computing means 15 via the internet, e. g. via a communication network, like e. g. TCP/IP.

As an alternative option, the computing means 15 and the memory 17 included in the measurement system MS may e.g. be located in the vicinity of the measurement device(s) MD, M1, M2, M3, M4, e. g. in the edge device 21 or in the superordinate unit 19 shown in Fig. 3.

Regardless of the number of measurands m, L, p, F1, F2 for which the method disclosed herein is performed and regardless of the location of the computing means 15 employed to determine the corresponding measurement result(s) MR, the measurement result(s) MR determined by the method disclosed herein provide the advantage, that they are much more stable, accurate and reliable than the measured values mv based on which they have been determined. Correspondingly, the measurement result(s) MR provided by the method are e.g. employed to monitor, to regulate and/or to control the respective measurand m, L, p, F1, F2, an operation of a plant or facility, e. g. a production facility, and/or at least one step of a process, e. g. a production process, performed at the application, where the measurement device(s) MD, M1, M2, M3, M4, is/are employed. In the example shown in Fig. 3, the measurement result(s) MR of the measurand(s) L, p, F1 and/or F2 are provided to the superordinate unit 19 configured to monitor, to regulate and/or to control the respective measurand L, p, F1, F2, an operation of a plant or facility, and/or at least one step of a process performed at the application, where the measurement device(s) M1, M2, M3, M4 are installed.

### List of reference numerals

- 1: Measurement site
- 3: Measurement unit
- 5: Sensing element
- 7: Medium
- 9: Container
- 11: Measurement electronic
- 13: Filter
- 15: Computing means
- 17: memory
- 19: Superordinate unite
- 21: Edge device

## Claims

1. A filtering method of filtering measured values (mv) of a measurand (m) comprising the method steps of:
recording data (D) including measured values (mv) of the measurand (m) and their time of determination (t),
based on training data included in the recorded data (D) parametrizing a filter (13) having an adjustable filtering strength (S) by:
setting the filtering strength (S) to a predetermined initial filtering strength (S1),
performing a process of by means of the filter (13) filtering the measured values (mv) included in the training data and determining a fractal dimension (d₁) of the filtered values (fv₁) provided by the filter (13), and
iteratively repeating this process by increasing the filtering strength (S) of the filter (13) to a higher filtering strength (Sn) and by subsequently filtering the measured values (mv) and determining the fractal dimension (dₙ) of the filtered values (fvₙ) determined by the filter (13) having the higher filtering strength (Sn) until a decay of the fractal dimensions (Δdₙ) determined at the end of each iteration (n) of the process drops below a predetermined threshold (Δd_{ref}),
putting the filter (13) into operation based on a parametrization corresponding to the filtering strength (Sn) employed in the last iteration (n),
by means of the parametrized filter (13) filtering the measured values (mv) of the measurand (m), and
providing a filtering result (FR) including filtered values (fv) of the measured values (mv) of the measurand (m) determined by the parametrized filter (13) and/or a residue (Δmv) between the measured values (mv) and the filtered values (fv) determined by the parametrized filter (13).

2. The filtering method according to claim 1, wherein the filter (13) is a parametrizable filter, a smoothing filter, a sliding window filter, a moving average filter, a Savitzky-Golay filter, a wavelet decomposition filter, an autoregressive filter (AR-filter), an autoregressive moving average filter (ARMA-filter), an autoregressive integrated moving average filter (ARIMA-filter), an autoregressive moving average filter (ARIMA filter) configured to filter the measured values (mv) based on an autoregressive integrated moving average model (ARIMA model), a seasonal autoregressive moving average filter (SARIMA-filter), a network filter, a neural network filter, or a neural network filter including a neural network, a recurrent neural network, a convolutional neural network or a Long short-term memory (LSTM).

3. The filtering method according to claim 1 to 2, wherein the filter (13) is configured to operate based on parameter settings, that are adjustable in a manner that enables for the filtering strength (S) of the filter (13) to be set to a number of different predetermined filtering strengths.

4. The method according to claim 1 to 3, wherein the initial filtering strength (S1) is:
a) predetermined based on the number of measured values (mv) included in the training data and/or based on a frequency spectrum of the measured values (mv) included in the training data, or
b) set to a default value.

5. The filtering method according to claim 1 to 4, wherein the training data is unlabeled data and/or includes a predetermined number of measured values (mv) and/or measured values (mv) that have been measured during an initial and/or predetermined training time interval or an arbitrarily selected time interval of a predetermined duration.

6. The filtering method according to claim 1 to 5, wherein each iteration (n) includes a step of determining the decay of the fractal dimensions (Δdₙ):
a) as or based on a ratio of the fractal dimension (dₙ) of the filtered values (fvₙ) determined during the respective iteration (n) and a fractal dimension (do) of the unfiltered measured values (mv) included in training data, or
b) as or based on a ratio of the fractal dimension (dₙ) of the filtered values (fvₙ) determined during the respective iteration (n) and the fractal dimension (dₙ₋₁) of the filtered values (fvₙ₋₁) determined during the previous iteration (n-1), or
c) based on three or more of the previously determined fractal dimensions (dᵢ, dⱼ, dₖ,... ; i,j, k,... ∈ [0,1 ..., *n*]) and/or based on a property of a function fitted to several or all previously determined fractal dimensions (d₀,d₁,... , dₙ).

7. The filtering method according to claim 1 to 6, additionally comprising the steps of:
at least once, periodically, or repeatedly updating the parametrization of the filter (13), and
subsequently determining and providing the filtering result (FR) with the filter (13) operating based on the updated parametrization,
wherein each updated parametrization is determined by repeating the determination of the parametrization of the filter (13) based on data included in the recorded data (D), that includes at least one measured value (mv) of the measurand (m), that has been determined and/or recorded after the previous parametrization of the filter (13) has been determined.

8. The filtering method according to claim 7, wherein each updated parametrization is determined based on data included in the recorded data (D), that has been determined and/or recorded during a time interval of a predetermined duration preceding the point in time, when the respective updated parametrization is determined.

9. The filtering method according to claim 7 to 8, wherein the parametrization is updated:
a) periodically after predetermined re-parametrization time intervals,
b) after an event, that may have an impact on properties of the measured values (mv) of the measurand (m) and/or on properties of the noise included in the measured values (mv), has occurred, and/or
c) when a given number larger or equal to one of measured values (mv) has been determined and/or recorded after the parametrization has last been determined.

10. A method of using the filtering method according to claims 1 to 9 in a method of determining and providing a measurement result (MR) of a measurand (m, L, p, F1, F2) comprising the steps of:
by means of a measurement device (MD, M1, M2, M3, M4) repeatedly or continuously determining and providing measured values (mv) of the measurand (m, L, p, F1, F2),
wherein the measurement device (MD, M1, M2, M3, M4) is either:
a physical device measuring the measurand (m, L, p, F1, F2) at a measurement site, or
is given by a virtual device, a computer implemented device or a soft sensor repeatedly or continuously determining and providing the measured values (mv) of the measurand (m) based on data provided to it,
based on the measured values (mv) and their time of determination (t) filtering the measured values (mv) of the measurand (m, L, p, F1, F2) by performing the filtering method according to claim 1 to 9, and
determining and providing the measurement result (MR) of the measurand (m, L, p, F1, F2) as or based on the filtering result (FR) determined by performing the filtering method, wherein the filtering result (FR) includes the filtered values (fv) or includes both the filtered values (fv) and the residue (Δmv).

11. The method according to claim 10, further comprising at least one of the steps of:
performing the method of determining and providing the measurement result (MR) of the measurand (m, L, p, F1, F2) according to claim 10 for two or more measurands (m, L, p, F1, F2),
monitoring, regulating and/or controlling the measurand (m) or at least one of the measurands (m, L, p, F1, F2), monitoring, regulating and/or controlling an operation of a plant or facility and/or monitoring, regulating and/or controlling at least one step of a process performed at an application, where the measurement device(s) (MD, M1, M2, M3, M4) is/are employed, based on the measurement result(s) (MR), and
providing the measurement result(s) (MR) of the measurand(s) (m, L, p, F1, F2) to a superordinate unit (19) configured to monitor, to regulate and/or to control the respective measurand (m, L, p, F1, F2), an operation of a plant or facility, and/or at least one step of a process performed at the application, where the measurement device(s) (MD, M1, M2, M3, M4) determining the measured values (mv) of the measurand(s) (m, L, p, F1, F2) is/are employed.

12. A measurement device (MD) configured to perform the method according to claim 10 to 11, comprising:
a measurement unit (3) configured to determine and to provide the measured values (mv) of the measurand (m),
computing means (15), a memory (17) associated to the computing means (15) and a computer program (SW) installed on the computing means (15) which, when the program is executed by the computing means (15), cause the computing means (15) to carry out the method of determining and providing the measurement result (MR) according to claim 10 to 11 based on the measured values (mv) provided to the computing means (15) by the measurement unit (3).

13. A measurement system (MS) configured to perform the method according to claim 10 to 11 for at least one measurand (L, p, F1, F2), the measurement system (MS) comprising:
for each measurand (L, p, F1, F2) a measurement device (M1, M2, M3, M4) determining and providing measured values (mv) of the respective measurand (L, p, F1, F2),
computing means (15) connected to and/or communicating with each measurement device (M1, M2, M3, M4) and configured to receive the measured values (mv) of each measurand (L, p, F1, F2),
a memory (17) associated to the computing means (15) and
a computer program (SW) installed on the computing means (15) which, when the program is executed by the computing means (15), cause the computing means (15) to carry out the method of determining and providing the measurement result(s) (MR) according to claim 10 to 11 for each measurand (L, p, F1, F2)).

14. The measurement system (MS) according to claim 13, wherein:
the computing means (15) are located in an edge device (21), in a superordinate unit (19) or in the cloud, and
at least one or each measurement device (M1, M2, M3, M4) is connected to and/or communicating with the computing means (15) directly, via a superordinate unit (19), via an edge device (21) located in the vicinity of the respective measurement device (M1, M2, M3, M4), and/or via the internet.

15. A computer program (SW) comprising instructions which, when the program is executed by a computer, cause the computer to carry out the filtering method according to claims 1 to 9, based on the measured values (mv) provided to the computer.

16. A computer program product comprising the computer program (SW) according to claim 15 and at least one computer readable medium, wherein at least the computer program (SW) is stored on the computer readable medium.
